# FASCICULE DE BREVET EUROPEEN

(11) **EP 0 493 993 B1**
(45) Date de publication et mention de la délivrance du brevet: **25.10.1995**
(21) Numéro de dépôt: 91403334.5
(22) Date de dépôt: 09.12.1991
(51) Int. Cl.: H04N 13/04

(54) **Dispositif de correction géométrique des images vidéo en relief**
Vorrichtung zur geometrischen Korrektur von Video-Raumbildern
Geometric correction device for threedimsional video images

(30) Priorité: 10.12.1990 FR 9015441
(43) Date de publication de la demande: 08.07.1992
(73) Titulaire: FRANCE TELECOM, 75015 Paris (FR); TELEDIFFUSION DE FRANCE S.A., 92542 Montrouge Cédex (FR)
(72) Inventeur: Cahen, Olivier, F-91190 Gif Sur Yvette (FR)
(74) Mandataire: Plaçais, Jean-Yves

(56) Documents cités:
- EP-A- 0 425 985
- PATENT ABSTRACTS OF JAPAN, vol. 13, no. 509 (E-846)[3857], 15 novembre 1989; & JP-A-1 206 798 (SANYO) 18-08-1989
- PATENT ABSTRACTS OF JAPAN, vol. 13, no. 144 (E-740)[3492], 10 avril 1989; & JP-A-63 306 795 (SHARP) 14-12-1988
- PATENT ABSTRACTS OF JAPAN, vol. 13, no. 201 (E-757)[3549], 12 mai 1989; & JP-A-1 22 187 (SONY CORP.) 25-01-1989
- IDEM

## Description

L'invention concerne le traitement de signaux d'image vidéo en relief.

La télévision en relief peut être présentée au public sous forme d'émissions diffusées par le câble ou par le réseau hertzien, ou encore sous forme d'enregistrements commercialisés sur vidéocassettes.

La perception télévisuelle en relief suppose que le téléspectateur reçoive par ses deux yeux des informations correspondant à des prises de vues spatialement différentes. Du côté de l'émission, on recourt à deux angles de prise de vues différents, définissant deux images différentes, plus exactement deux sources de signaux d'image.

A la réception, il faut visualiser conjointement ces deux images, et les percevoir sélectivement par les deux yeux.

Une solution consiste à prévoir deux écrans cathodiques observés conjointement à travers un miroir semi-transparent, ou deux vidéoprojecteurs polarisés projetant sur un même écran non dépolarisant. Dans ces deux cas, les spectateurs portent chacun des lunettes polarisantes légères et peu contraignantes, mais l'équipement est trop volumineux et trop coûteux pour le grand public.

La solution la plus simple consiste à munir les téléspectateurs de lunettes à occultation alternative, par exemple au moyen de dispositifs à cristaux liquides, synchronisée sur la présentation des vues gauche et droite sur un même écran cathodique. Dans le procédé dit "séquentiel alterné", les trames paires et impaires correspondent respectivement aux vues gauche et droite, sous réserve bien sûr d'une ini tialisation convenable de ces données de catégorie de trames.

Une difficulté apparaît, car l'observation correcte du relief suppose une certaine correspondance entre les conditions de prise de vues et les conditions d'observation.

Les prises de vues "en relief" sont réalisées dans des conditions techniques précises, notamment en ce qui concerne le choix de l'intervalle et de la convergence des caméras en fonction de la focale et de la distance objet. En règle générale, les images stéréoscopiques obtenues ne sont conformes aux objets représentés que pour un téléspectateur placé à une distance définie d'un écran-type de dimensions données. Sinon, l'image est largement déformée:
- si l'écran est plus petit que l'écran-type, les objets paraissent aplatis et trop petits, surtout s'ils sont éloignés; les objets les plus éloignés ne peuvent pas apparaître au-delà d'une certaine distance limite, typiquement quatre fois la distance de l'écran, si celui-ci a les trois quarts de la largeur de l'écran-type.
- au contraire, si l'écran est plus grand que l'écran-type, tous les objets apparaissent trop éloignés, étirés en profondeur et trop grands; les objets situés au-delà d'une certaine distance ne sont vus que dans des conditions très désagréables où les axes oculaires divergent, ce qui produit une fatigue excessive du téléspectateur.

Certains téléspectateurs accepteraient peut-être de s'accommoder de ces images déformées, d'autres exigeront un meilleur confort visuel, ce qui implique que les images soient conformes, même s'ils ont choisi pour d'autres raisons un écran de dimensions différentes.

La présente invention vient résoudre ce problème en proposant un dispositif indépendant des normes et des techniques de codage des émissions publiques en relief, tel que des téléviseurs de toutes dimensions puissent présenter des images conformes et confortables.

Le dispositif proposé comprend de façon connue (Patent Abstract of Japan, vol.13, n°201 (E-757) [3549], 12 mai 1989; & JP-A-122187), des moyens tels qu'un compteur de parité de trames, pour classifier les trames en deux catégories, correspondant respectivement à des prises de vues spatialement différentes, comme des vues de gauche et de droite, par exemple.

Il est remarquable en ce qu'il comporte :
- un circuit d'horloge définissant un temps de correction, dit "décalage temporel", compris entre 0,5 et 6 microsecondes, et choisi à partir d'une valeur de correction correspondant à un déplacement relatif entre les images de l'une et l'autre catégorie, et
- des moyens de correction capables de produire, pour l'une au moins des catégories de trame, un décalage relatif entre la partie visualisable du signal vidéo et le balayage ligne, de sorte que le déplacement relatif entre les images de l'une et l'autre catégorie corresponde à ladite valeur de correction, et également capables, pour toutes les trames, de forcer le signal vidéo à un niveau auxiliaire non visible, à l'une au moins des extrémités de la partie utile du signal vidéo, pendant une durée sensiblement égale au décalage temporel relié à la valeur de correction.

Le moyen ainsi utilisé consiste à déplacer relativement les deux vues gauche et droite en respectant les conditions correctes de formation de la fenêtre stéréoscopique:
- pour compenser les effets d'un écran plus petit que l'écran-type, chaque vue doit être déplacée de son propre côté ;
- pour compenser les effets d'un écran plus grand que l'écran-type, chaque vue doit être déplacée du côté opposé.

En pratique, le déplacement relatif des vues est réalisé de l'une des deux manières suivantes :
- ou bien, le signal de synchronisation du début de balayage ligne des trames d'un côté, gauche ou droit, est retardé, soit par un circuit retardateur, soit en retenant le signal vidéo à un niveau plus haut et, dans ce cas, la trame du côté vidéo retardé est repoussée vers la gauche ;
- ou bien, c'est le signal vidéo qui est retardé et, dans ce cas, la trame du côté retardé est repoussée vers la droite.

Selon un premier mode de réalisation, le dispositif selon l'invention est incorporé dans un téléviseur qui est donc modifié à cet effet.

Selon un deuxième mode de réalisation, le dispositif est réalisé dans un boîtier autonome qui comporte sa propre alimentation.

Ce boîtier peut alors être utilisé de deux manières :
- ou bien, il comporte ses propres circuits de détection et de modulation HF, comme un magnétoscope, et il est relié au téléviseur et s'il y a lieu au magnétoscope par les circuits d'antenne ;
- ou bien, il ne comporte pas ces circuits et il est relié entre le téléviseur et le magnétoscope par les prises de péritélévision.

D'autres caractéristiques et avantages de l'invention apparaîtront à l'examen de la description détaillée ci-après, et des dessins annexés, sur lesquels:
- La figure 1 regroupe quatre diagrammes temporels représentant les variations, d'une part de la tension appliquée au dispositif de balayage ligne et, d'autre part d'un signal vidéo en relief fictif (supposé uniformément croissant de gauche à droite pendant le balayage d'une ligne et identique pour les deux vues gauche et droite), où
   . les figures 1a et 1b représentent respectivement et en correspondance le balayage et le signal vidéo, tels qu'ils sont décodés normalement pour une ligne d'une trame de gauche et,
   . les figures 1c et 1d font de même pour une ligne d'une trame de droite;
- La figure 2 illustre schématiquement un premier circuit selon l'invention;
- La figure 3 regroupe des diagrammes temporels semblables à ceux de la figure 1, mais avec des signaux corrigés, selon l'invention, où la compensation est obtenue, dans le cas d'un écran-type trop petit, par retard du signal de synchronisation de balayage ligne des trames de gauche;
- La figure 4 regroupe des diagrammes temporels semblables à ceux de la figure 1, mais avec des signaux corrigés, selon l'invention, dans le cas où l'écran est plus grand que l'écran-type et où la compensation est obtenue comme ci-dessus en retardant le signal de synchronisation du balayage ligne des trames de droite.
- La figure 5 illustre schématiquement un second circuit selon l'invention.
- La figure 6 regroupe des diagrammes temporels semblables à ceux de la figure 1, mais avec des signaux corrigés, correspondant à ce second circuit, dans le cas où l'écran est plus petit et où la compensation est effectuée par retard du signal vidéo en bande de base sur les trames de droite;
- La figure 7 illustre schématiquement un troisième circuit selon l'invention; et
- La figure 8 regroupe des diagrammes temporels semblables à ceux de la figure 1, qui montre les signaux et le balayage selon la variante de la figure 7.

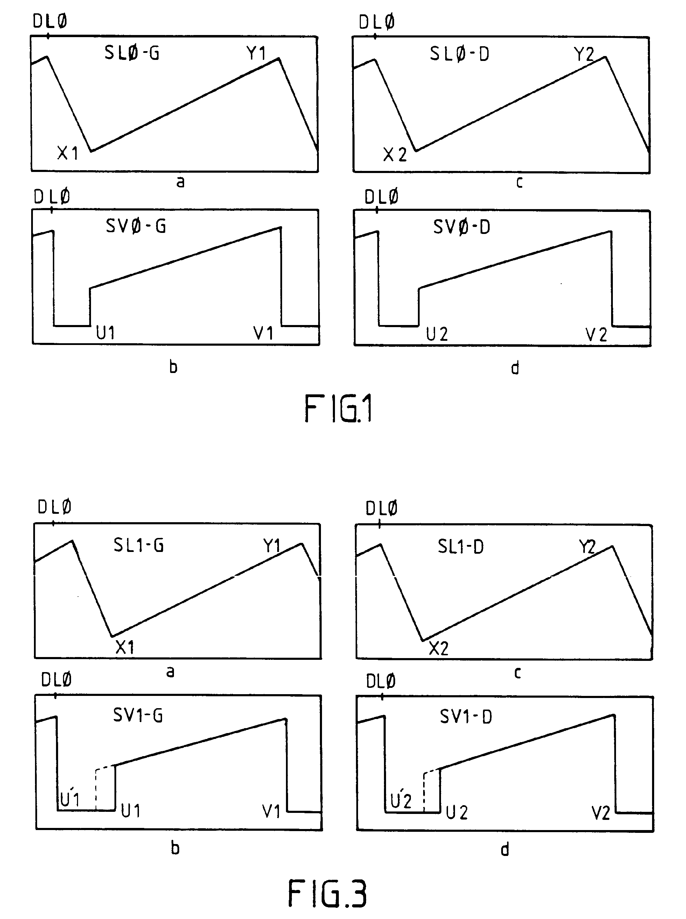

Sur la figure 1, on voit en a et b, pour une ligne d'une trame de gauche, et en c et d, pour une ligne d'une trame de droite, des points X1, Y1, U1, V1, pour la trame de gauche et X2, Y2, U2, V2, pour la trame de droite, matérialisant les instants limites du balayage ligne qui représentent les extrémités latérales de cette ligne de l'image.

Entre ces points, le signal a la même valeur à gauche sur la figure 1b et à droite sur la figure 1d, ce qui est conforme à l'hypothèse indiquée ci-dessus, que le signal est identique pour les deux vues, c'est-à-dire que l'objet fictif représenté se trouve entièrement situé dans le plan où convergent les axes optiques des deux caméras. Cet objet fictif est donc vu entièrement dans le plan de l'écran.

Dans ce cas, les points limites gauche et droit de l'image ont la même position sur les deux vues, donc la fenêtre est vue dans le plan de l'écran. C'est la situation qui convient le mieux dans le cas d'un écran de mêmes dimensions que l'écran-type.

Sur les dessins, ST désigne les signaux de synchronisation de trame. Le point DL0 désigne le début du retour de balayage ligne, tel que défini par le signal de synchronisation ligne brut SL0, extrait du signal vidéo brut SV0. Ces deux signaux, modifiés selon l'invention, deviennent SV1 et SL1. Le signal SV0 ou SV1 reçoit le suffixe G ou D, là ou il est nécessaire de distinguer les trames Gauche et Droite. Les signaux SL0 et SL1, suffixés de G ou D, désignent la forme d'onde de balayage ligne Gauche ou Droite, et non le signal de synchronisation ligne correspondant.

On considère tout d'abord le cas où les signaux de synchronisation de ligne (SL0) ont été séparés du signal vidéo avant le traitement de celui-ci selon l'invention.

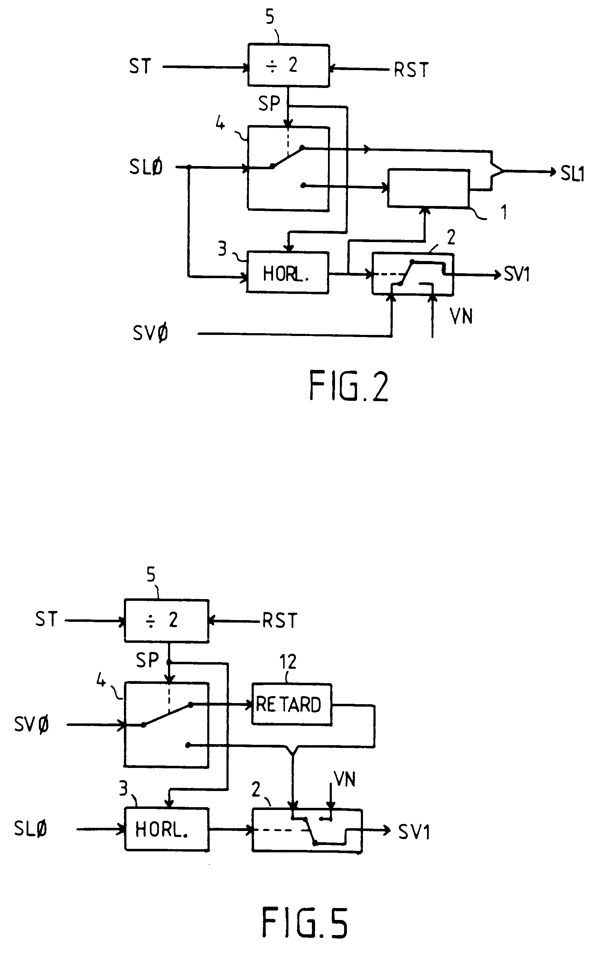

Dans le premier circuit proposé (figure 2), on va retarder le signal de synchronisation des lignes des trames gauche ou droite, c'est à dire la commande de balayage. Le signal de synchronisation de trame ST actionne un compteur (5) de parité de trame qui peut être inversé par un ordre de remise à zéro RST. L'ordre RST peut provenir par exemple d'une information de référence transmise avec le signal vidéo, ou d'une intervention du téléspectateur constatant que les images Gauche et Droite sont interverties. Ce compteur (5) fournit un signal logique SP qui représente l'information "trame gauche" ou "trame droite", et est transmis à un circuit d'horloge (3) et à un circuit aiguilleur (4).

Le circuit aiguilleur (4) reçoit comme entrée le signal de synchronisation de ligne brut SL0. Selon le niveau logique du signal SP, c'est à dire selon la parité reçue du compteur (5), il fournit comme sortie SL1 soit directement le signal SL0, soit ce signal retardé par un circuit retardateur (1). Le balayage effectif, commandé par le signal SL1, est donc retardé ou non enfonction du fait que la trame est droite ou gauche. Ainsi se trouve réalisée la première caractéristique de l'invention.

Le circuit d'horloge (3) établit, à partir de chaque transition du signal SP, donc pour toutes les trames, les durées pendant lesquelles le signal vidéo doit être ramené ou maintenu à son niveau de suppression. Cette durée est comptée à partir du début théorique de chaque balayage ligne, défini à partir du signal SL0.

Le signal vidéo brut SV0, appliqué à un inverseur 2, est modifié pendant le temps défini par le circuit (3): on lui substitue un niveau VN non visible sur l'image, qui peut être le niveau de Noir, ou le niveau plus bas dit de suppression.

La durée comptée par le circuit d'horloge (3) et celle définie par le circuit de retard (1) doivent se correspondre sensiblement. Par exemple, le circuit de retard (1) est piloté par le circuit d'horloge (3), de façon à réaliser l'égalité de ces deux temps.

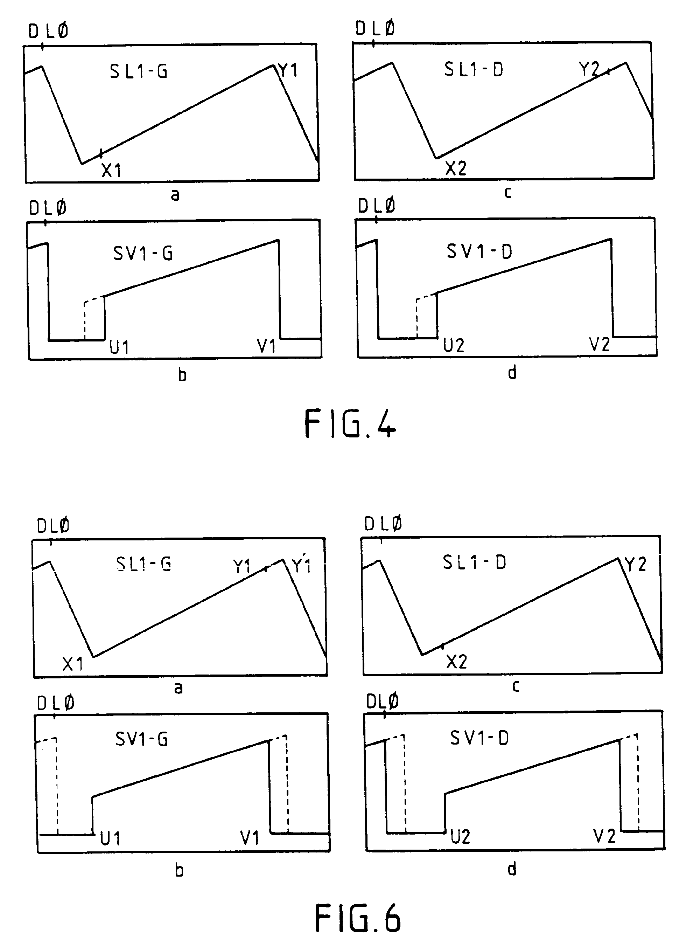

Les figures 3 (écran trop petit) et 4 (écran trop grand) illustrent ce qui se passe, suivant que les trames retardées sont celles de gauche ou de droite.

Sur la figure 3a, du fait que le balayage SL1-G est retardé, le point X1 représentant l'extrémité gauche de l'image SV1-G est déplacé vers la droite. Le point Y1 n'est pas déplacé, du fait que la suppression de ligne V1 intervient avant la fin du balayage retardé. Mais la suppression précédente est prolongée de U′1 à U1 (figure 3b), pour éviter que le retour de ligne ne soit partiellement visible.

Sur la figure 3c, le balayage SL1-D est inchangé. Sur la figure 3d, la suppression de ligne est également prolongée de U′2 à U2, de sorte que l'extrémité gauche de la ligne soit déplacée vers la droite, de U′2 à U2.

Ainsi, l'image de droite et ses limites sont déplacées vers la droite par rapport à l'image de gauche. L'ensemble de l'image stéréoscopique, fenêtre comprise, est ainsi présenté plus loin pour compenser le fait que l'écran est plus petit que l'écran-type.

Le déplacement relatif des deux vues doit avoir pour valeur v = B (1 - a) où B désigne l'écartement interoculaire du spectateur et a désigne le rapport de la largeur de l'écran à celle de l'écran-type. Ce déplacement peut être obtenu par un décalage temporel de valeur D = T.v / I où T désigne la durée du balayage ligne, retour non compris, et I désigne la largeur de l'image obtenue par ce balayage. Le retard peut donc varier d'une demi-microseconde si a = 0,9, à environ 6 microsecondes, pour a = 0,5.

Ce déplacement relatif des deux vues, sans autres précautions, présente des inconvénients. Ceux-ci sont résolus par le fait que les moyens de correction sont rendus capables de forcer le signal vidéo à un niveau auxiliaire non visible, à l'une au moins des extrémités de la partie utile du signal vidéo. Ce forçage est effectué, pour toutes les trames, à l'une (au moins) des extrémités de la durée du balayage ligne, pendant une durée égale au décalage temporel D défini ci-dessus. De ce fait, le balayage n'est effectif, c'est-à-dire que le signal vidéo n'est visible, que pendant une partie limitée de la durée du balayage ligne.

En d'autres termes, pendant le temps où le balayage n'est pas effectif pour l'une des catégories de trames, du fait dudit décalage, on réalise, pour toutes les trames, un forçage dont la durée est reliée à ladite valeur de correction.

Ainsi, on déplace également les deux bords de la fenêtre, en maintenant le signal vidéo à sa valeur de suppression pendant la même durée au début ou à la fin du balayage ligne.

On évite ainsi que:
- d'une part, le signal vidéo ne soit pas totalement éteint pendant une partie du retour du balayage ligne, car des lignes parasites apparaîtraient alors sur une partie importante de la largeur de l'écran ;
- d'autre part, la "fenêtre", image stéréoscopique du contour des deux vues, devienne dissymétrique ; un de ses bords (droite si c'est la synchronisation ligne qui est retardée; gauche si un signal vidéo est retardé, comme décrit plus loin) serait repoussé à la distance normale d'observation de l'écran-type, alors que l'autre bord de la fenêtre serait laissé à sa position non correcte. Tout se passerait comme si l'image était vue à travers un cadre disposé obliquement par rapport au plan de l'écran.

La figure 4 montre le cas opposé où, pour compenser un écran trop grand, l'image stéréoscopique est rapprochée, en décalant vers la gauche la vue de droite. Sur la figure 4c, le balayage SL1-D des trames de droite est retardé. Au point Y2, la suppression arrête l'image avant la fin du balayage en V2. Sur les figures 4b et 4d, on voit que la suppression est prolongée sur la trame de gauche jusqu'au point U1, pour déplacer vers la droite jusqu'en X1 le bord gauche de la fenêtre et sur la trame de droite jusqu'au point U2, pour masquer le retour de ligne de la trame de droite.

Ce cas ne sera pas discuté à nouveau pour les autres modes de réalisation, remarque étant faite que la prise de vues peut être définie pour le plus grand des écrans des téléviseurs commerciaux les plus courants, par exemple 67 ou 70 cm de diagonale.

La figure 5 montre une variante du dispositif montré sur la figure 2, variante par laquelle la compensation est obtenue en retardant le signal vidéo en bande de base, au lieu d'agir sur la synchronisation du balayage.

Le circuit aiguilleur (4) reçoit maintenant le signal vidéo SV0. Il le transmet au circuit de blocage (2), soit directement lorsqu'il n'y a pas lieu de le retarder, soit par le circuit retardateur à large bande (12), selon la parité de la trame indiquée comme précédemment par le signal SP du compteur (5). Le circuit de blocage (2) fonctionne comme précédemment, actionné par le circuit d'horloge (3), pour substituer le niveau VN sur commande au signal SV0.

La durée comptée par le circuit d'horloge (3) et celle définie par le circuit de retard (12) doivent se correspondre sensiblement: ou bien le circuit 12 est une ligne à retard analogique de durée égale au temps compté par le circuit d'horloge (3); ou bien ce circuit d'horloge (3) commande un retardateur numérique, tel qu'un registre, qui constitue le circuit (12).

La figure 6 montre le résultat obtenu, et ce pour un écran trop petit. Le balayage (SL1-G,SL1-D) est inchangé. Le signal vidéo SV1-D est retardé en aval de l'extraction du signal de synchronisation du balayage ligne, sur la vue droite dans le cas ici considéré où l'écran est plus petit que l'écran-type.

Sur la vue droite (figure 6c), la fin de la suppression laisse commencer l'image à la position X2, décalée à droite. Le balayage se termine au point Y2, ce qui oblige à ramener dès ce moment, au point V2 (figure 6d), le signal vidéo à sa valeur de suppression. Par contre, sur la vue gauche, pour placer la limite droite à sa position correcte, le signal vidéo est dans ce cas ramené à son niveau de suppression dès le point V1 (figure 6b).

Bien entendu, il n'est pas indispensable de ramener le signal vidéo exactement à sa valeur de suppression, bien que ce soit aussi facile à réaliser ; le signal vidéo est en fait ramené à une valeur VN assez basse pour que l'image au point considéré apparaisse en noir, dans ce cas comme dans le précédent.

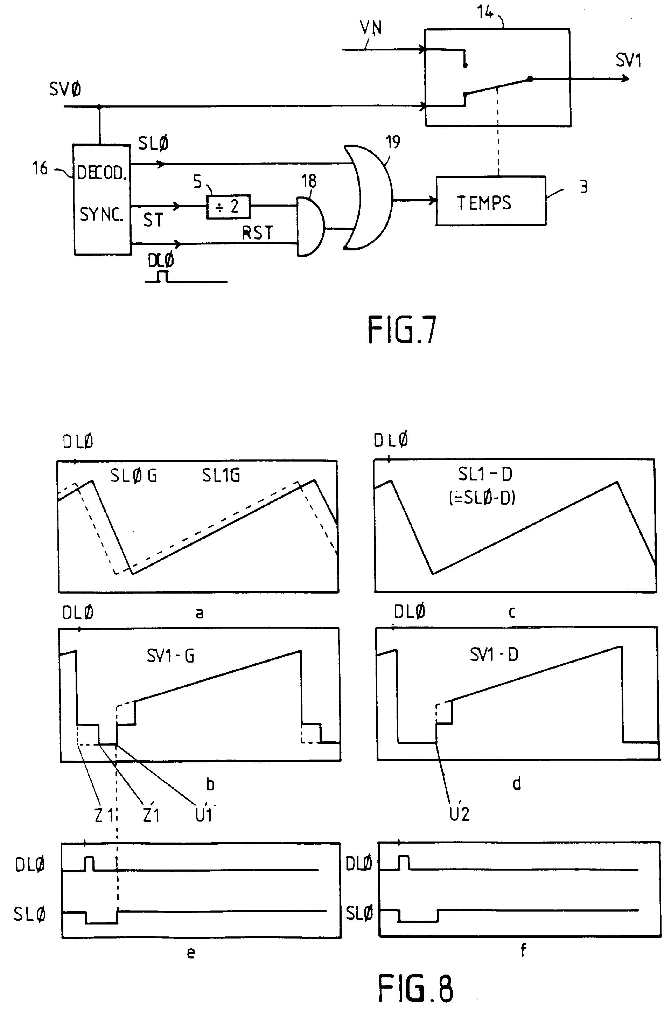

La figure 7 montre schématiquement le circuit modifiant le signal vidéo, dans un cas où l'extraction des signaux de synchronisation s'effectue après la modification.

Cette variante se prête bien au cas où le dispositif est réalisé sous forme d'un boîtier séparé, inséré entre un magnétoscope et un téléviseur, auxquels il est relié par les câbles de "péritélévision", ou par liaison sur câble d'antenne.

Comme ci-dessus, un circuit de commutation ou aiguilleur (14) adresse vers la borne de sortie vidéo SV1, soit le signal SV0, soit le niveau de noir VN. Le signal SV0 est également appliqué à un décodeur de synchronisation (16), qui extrait des signaux ST de synchronisation trame brute, SL0 de synchronisation ligne brute, et DL0 de début de retour de balayage ligne brut. Le compteur (5) de parité désigne les trames paires, par exemple. Une porte ET (18) reçoit la sortie de ce compteur (5) et le signal DL0. Une porte OU (19) reçoit la sortie de la porte ET (18) et le signal SL0. A partir de la sortie de la porte OU (19), un circuit d'horloge (3) établit les durées où le signal est modifié ; en début de suppression, pour une trame sur deux, et pour toutes les trames après la suppression.

Selon cette variante, il n'y a pas de circuit retardateur. En outre, le niveau VN doit être un niveau proche du noir, mais pas suffisamment bas pour déclencher la détection de synchronisation ligne, après le vrai décodage de synchronisation qui s'effectuera en aval.

La figure 8 montre le résultat, dans le cas d'un écran plus petit que l'écran-type.

Comme le signal vidéo SV1-G est au niveau de noir, mais pas au niveau de suppression, du point Z1 au point Z′1 (figure 8b), le balayage SL1-G des trames de gauche sera retardé par rapport au point DL0 (figure 8e), lors de la séparation en aval des signaux de synchronisation.

En outre, pendant la même durée après la suppression de ligne, on passe au niveau de noir au début de toutes les trames, c'est à dire à partir du point U′1 pour les trames de gauche (figures 8b et 8e) et pour les trames de droite à partir du point U′2 (figures 8d et 8f).

Le dispositif peut être réalisé selon d'autres variantes qui n'en altèrent pas le principe ni le résultat comme par exemple:
- avancer les signaux au lieu de les retarder, l'avance étant possible avec des signaux périodiques, ou mémorisés;
- action conjointe sur les signaux de synchronisation et sur les signaux vidéo visualisables;
- répartition du décalage temporel sur les trames de gauche et celle de droite, ou entre les balayages ligne des trames de gauche et de droite en conservant la condition que leur différence soit égale au décalage voulu.

Chacun des éléments du dispositif, circuit retardateur de la synchronisation ligne (1) ou circuit retardateur du signal vidéo (12), circuit de blocage (2), circuit d'horloge (3), circuit aiguilleur (4), compteur (5), circuit de commutation (14) ou décodeur (16), dont les fonctions ont été décrites avec précision ci-dessus, peut être réalisé de différentes manières connues et compatible avec les caractéristiques définies ci-dessus.

Ces circuits peuvent être réalisés en technologie analogique ou numérique ; le circuit de blocage (2) peut être une porte analogique ou un ensemble logique, selon la technologie retenue pour les autres éléments du téléviseur. Le retard du signal vidéo peut être réalisé sur le signal UHF ou en fréquence intermédiaire par une ligne à retard à large bande, ou en technologie numérique par des registres à décalage si le téléviseur est déjà pourvu de mémoires numériques de trames. En pareil cas il est également commandé par le circuit d'horloge (3).

En particulier, l'ensemble des circuits décrits ci-dessus, selon les figures 2 , 5 ou 7, est réalisé au moyen d'un seul circuit à haute intégration, dans lequel les éléments ici décrits sont tous incorporés sans qu'il soit possible de les isoler, mais où ils remplissent effectivement chacun la fonction décrite cidessus.

Dans le cas où la forme de l'écran n'est pas rectangulaire, les bords de l'écran, près des coins, peuvent constituer une partie de la fenêtre stéréoscopique qui, dans ce cas, ne serait pas vue plane. La durée pendant laquelle le signal vidéo doit être maintenu à sa valeur de suppression peut alors être différente selon le côté ; elle dépend de la ligne considérée et diffère du retard donné à la synchronisation ligne et au signal vidéo de l'une des trames. Cette durée est alors lue à chaque ligne dans une mémoire dont l'adresse est définie en fonction de la position de la ligne dans la trame, c'est à dire d'un comptage de lignes dans la trame.

Si le système de codage des émissions en relief comporte aussi des données d'assistance indiquant pour chaque trame qu'il s'agit d'une vue de gauche ou de droite, le compteur de parité (5) est constitué par le décodeur de ces données d'assistance, ou recalé d'après ces mêmes données.

L'invention s'applique tout aussi bien au cas d'un téléviseur utilisant une autre technique que celle du tube cathodique et, en particulier, l'une des diverses techniques dites d'"écrans plats", par exemple à plasma, à électroluminescence ou à cristaux liquides, ou d'un téléviseur utilisant une technique de projection.

## Revendications

1. Dispositif de traitement de signaux d'image vidéo en relief, comprenant des moyens, du genre compteur de parité de trames (5), pour classifier les trames en deux catégories correspondant respectivement à des prises de vues spatialement différentes, caractérisé en ce qu'il comporte :
- un circuit d'horloge (3) définissant un temps de correction, dit "décalage temporel", compris entre 0,5 et 6 microsecondes, et choisi à partir d'une valeur de correction correspondant à un déplacement relatif entre les images de l'une et l'autre catégorie, et
- des moyens de correction (1,2,12,14) capables de produire, pour l'une au moins des catégories de trame, un décalage relatif entre la partie visualisable du signal vidéo et le balayage ligne, de sorte que le déplacement relatif entre les images de l'une et l'autre catégorie corresponde à ladite valeur de correction, et également capables, pour toutes les trames, de forcer le signal vidéo à un niveau auxiliaire non visible, à l'une au moins des extrémités de la partie utile du signal vidéo, pendant une durée sensiblement égale au décalage temporel relié à la valeur de correction.

2. Dispositif selon la revendication 1, caractérisé en ce que les moyens de correction, qui agissent après que le signal de synchronisation de balayage ligne a été séparé du signal vidéo, comprennent:
- des moyens (1,12) de décalage, pour l'une des catégories de trames, entre le signal de synchronisation de balayage ligne et le signal vidéo, et
- des moyens (2) de blocage qui, pour toutes les trames, étendent la durée d'extinction au retour du balayage ligne d'un intervalle de temps défini par le circuit d'horloge (3).

3. Dispositif selon la revendication 2, caractérisé en ce que les moyens de décalage comportent un circuit retardateur (1) du signal de synchronisation de balayage ligne, et en ce que les moyens (2) de blocage étendent la durée d'extinction au retour du balayage ligne vers l'aval, pendant le début de la partie visualisable des signaux vidéo.

4. Dispositif selon la revendication 2, caractérisé en ce que les moyens de décalage comportent un circuit retardateur (12) du signal vidéo à visualiser, et en ce que les moyens (2) de blocage étendent la durée d'extinction au retour du balayage ligne vers l'amont, pendant la fin de la partie visualisable des signaux vidéo.

5. Dispositif selon la revendication 1, caractérisé en ce que les moyens de correction, qui agissent avant que le signal de synchronisation de balayage ligne n'ait été séparé du signal vidéo, comportent un circuit de commutation (14) à deux entrées recevant respectivement le signal vidéo, et un signal auxiliaire de niveau assez bas pour que l'image soit vue en noir, mais assez haut pour ne pas déclencher la synchronisation de ligne, et relié aux moyens de classification (5), ainsi qu'au circuit d'horloge (3),
ce circuit de commutation (14) substituant le signal auxi liaire au signal vidéo, pendant la durée définie par le circuit d'horloge (3), d'une part pour une catégorie de trames à la fin de la partie utile du signal vidéo, d'autre part pour toutes les trames au début de la partie utile du signal vidéo.

## Patentansprüche

1. Vorrichtung zur Signalverarbeitung von Videoraumbildern, mit Klassifikationseinrichtungen (5) in der Art eines Zählers für die Parität von Teilbildern, um die Teilbilder in zwei Kategorien entsprechend räumlich unterschiedlichen Aufnahmen zu klassifizieren, dadurch gekennzeichnet, daß er umfaßt:
eine Zeitschaltung (3), die eine Korrekturzeit definiert, genannt zeitliche Verschiebung, die zwischen 0,5 und 6 Mikrosekunden liegt, und aufgrund eines bestimmten Korrekturwerts gewählt wird, dem eine relative Verschiebung zwischen den Bildern der einen und der anderen Kategorie entspricht, und
Korrektureinrichtungen (1,2,12,14), die für wenigstens eine der Teilbild-Kategorien eine relative Verschiebung zwischen dem sichtbaren Teil des Videosignales und der Zeilenabtastung erzeugen können, so daß die relative Versetzung zwischen den Bildern der einen und der anderen Kategorie dem Korrekturwert entspricht, und die gleichermaßen für alle Teilbilder das Videosignal auf ein nicht sichtbares Hilfsniveau an wenigstens einem der Randpunkte des nutzbaren Bereiches des Videosignals während einer Dauer zwingen können, die nahezu gleich der mit dem Korrekturwert verbundenen zeitlichen Verschiebung ist.

2. Vorrichtung nach Anspruch 1, dadurch gekennzeichnet, daß die Korrektureinrichtungen, die wirksam werden, nachdem das Synchronisationssignal der Zeilenabtastung vom Videosignal getrennt wurde,
- Verschiebeeinrichtungen (1,12 für eine der Teilbildkategorien, zwischen dem Synchronisationssignal der Zeilenabtastung und dem Videosignal, und
- Blockiereinrichtungen (2), die für alle Teilbilder die Auslöschdauer bei der Rückkehr der Zeilenabtastung um ein Zeitintervall, das durch die Zeitschaltung (3) definiert wird, ausdehnen,
aufweisen.

3. Vorrichtung nach Anspruch 2, dadurch gekennzeichnet, daß die Verschiebeeinrichtungen eine Verzögerungsschaltung (1) für das Synchronisationssignal der Zeilenabtastung umfassen, und die Blockiereinrichtungen (2) die Auslöschdauer bei der Rückkehr der Zeilenabtastung nach vorne während des Anfangs des sichtbaren Bereiches des Videosignals ausdehnen.

4. Einrichtung nach Anspruch 2, dadurch gekennzeichnet, daß die Verschiebeeinrichtungen eine Verzögerungsschaltung (12) für das darzustellende Videosignal aufweisen, und die Blockiereinrichtungen (2) die Auslöschdauer bei der Rückkehr der Zeilenabtastung nach hinten während des Endes des sichtbaren Bereiches der Videosignale ausdehnen.

5. Einrichtung nach Anspruch 1, dadurch gekennzeichnet, daß die Korrektureinrichtungen, die wirksam werden, bevor das Synchronisationssignal der Zeilenabtastung vom Videosignal getrennt wurde
- einen Schaltkreis (14) mit zwei Eingängen aufweisen, die jeweils das Videosignal und ein Hilfsignal empfangen, das letzteres so schwach ist, daß das Bild schwarz gesehen wird, aber ausreichend stark ist, so daß die Zeilensynchronisation nicht angesprochen wird, und daß der Schaltkreis (14) mit den Klassifikationseinrichtungen (5) und mit der Zeitschaltung (3) verbunden ist, wobei der Schaltkreis (14) das Videosignal durch das Hilfssignal während der durch die Zeitschaltung (3) definierten Dauer, einerseits für eine Kategorie der Teilbilder am Ende des nutzbaren Bereiches des Videosignals andererseits für alle Teilbilder am Anfang des nutzbaren Bereiches des Videosignals, ersetzt.

## Claims

1. Device for processing three-dimensional video image signals, comprising means of the frame parity counting type (5) for classifying the frames in two categories corresponding, respectively, to spatially different shots, characterised in that it comprises:
- a clock circuit (3) defining a correction time, known as a "time shift", of between 0.5 and 6 microseconds, and selected on the basis of a correction value corresponding to a relative displacement between the images of the one and the other category, and
- correction means (1, 2, 12, 14) which are capable of producing, for at least one of the frame categories, a relative shift between the portion of the video signal that can be visualised and the line sweep operation, so that the relative displacement between the images of the one and the other category corresponds to the said correction value, and which are also capable, for all the frames, of forcing the video signal to a non-visible auxiliary level, at at least one end of the useful portion of the video signal, for a period substantially equal to the time shift associated with the correction value.

2. Device according to Claim 1,
characterised in that the correction means, which act after the line sweep synchronisation signal has been separated from the video signal, comprise:
- shifting means (1, 12), for one of the frame categories, between the line sweep synchronisation signal and the video signal; and
- blocking means (2) which, for all the frames, extend the period of extinguishment on the line sweep return by a time interval defined by the clock circuit (3).

3. Device according to Claim 2,
characterised in that the shifting means comprise a circuit (1) for retarding the line sweep synchronisation signal, and in that the blocking means (2) extend the period of extinguishment on the downstream line sweep return, for the beginning of the portion of the video signals that can be visualised.

4. Device according to Claim 2,
characterised in that the shifting means comprise a circuit (12) for retarding the video signal to be visualised, and in that the blocking means (2) extend the period of extinguishment on the upstream line sweep return, for the end of the portion of the video signals that can be visualised.

5. Device according to Claim 1,
characterised in that the correction means, which act before the line sweep synchronisation signal has been separated from the video signal, comprise a switching circuit (14) which has two inputs which receive, respectively, the video signal and an auxiliary signal of a sufficiently low level for the image to be seen in black but sufficiently high not to trigger line synchronisation, and which is connected to the classification means (5) and also to the clock circuit (3), the switching circuit (14) substituting the auxiliary signal for the video signal for the period defined by the clock circuit (3), on the one hand for a category of frames at the end of the useful portion of the video signal and on the other hand for all the frames at the beginning of the useful portion of the video signal.
